(19) Europäisches Patentamt

European Patent Office

Office européen des brevets

(11) **EP 1 089 218 B1**

(12) **FASCICULE DE BREVET EUROPEEN**

(45) Date de publication et mention
de la délivrance du brevet:
**09.01.2002 Bulletin 2002/02**

(51) Int Cl.⁷: **G06K 19/07**

(21) Numéro de dépôt: **00470014.2**

(22) Date de dépôt: **11.09.2000**

(54) **Circuit d'entrée pour carte à puce à mémoire**

Eingangsschaltung für IC Speicherkarte

Input circuit for memory IC card

(84) Etats contractants désignés:
**DE FR GB IT**

(30) Priorité: **28.09.1999 FR 9912327**

(43) Date de publication de la demande:
**04.04.2001 Bulletin 2001/14**

(73) Titulaire: **STMicroelectronics S.A.**
**92120 Montrouge (FR)**

(72) Inventeur: **Moreaux, Christophe,**
**Cabinet Ballot Schmit**
**57070 Metz (FR)**

(74) Mandataire: **Ballot, Paul Denis Jacques**
**Cabinet Ballot 9 Rue Claude Chappé**
**57070 Metz (FR)**

(56) Documents cités:
**EP-A- 0 362 050          US-A- 5 737 571**

**Description**

L'invention a pour objet un circuit d'entrée pour carte à puce à mémoire. L'invention concerne plus particulièrement le domaine des cartes à puce comprenant une mémoire programmable et effaçable électriquement et dans lesquelles la transmission des informations se fait par contact direct entre la carte et le lecteur. Un exemple type d'application de tels circuits est le cas des cartes téléphoniques.

Pour ce type d'application, la mémoire utilisée a le plus souvent une faible capacité, de l'ordre de 300 bits. Une partie de la mémoire contient par exemple des codes identifiant la carte et / ou son propriétaire et / ou son fabricant. Une autre partie de la mémoire peut contenir un compteur d'unités, c'est le cas notamment des cartes téléphoniques.

L'adressage de la mémoire, les opérations de lecture et / ou d'écriture se font de manière séquentielle. Trois commandes suffisent le plus souvent pour gérer une telle mémoire. Une commande de déplacement et de lecture RE permet de se déplacer d'une cellule mémoire à la cellule mémoire suivante et de lire le contenu de cette dernière. Une commande d'écriture WR permet de programmer la cellule mémoire dans laquelle on se trouve. Enfin une commande d'initialisation RST permet d'initialiser les commandes de la mémoire, c'est-à-dire de se positionner sur la première cellule de la mémoire en attente d'une instruction.

Ainsi, pour programmer la n-ième cellule mémoire, on effectue successivement les commandes suivantes : une commande d'initialisation RST pour se placer sur la première cellule mémoire, (n - 1) commandes de déplacement et de lecture RE pour se positionner sur la n-ième cellule mémoire et enfin une commande d'écriture WR pour programmer la n-ième cellule. Si plusieurs cellules de la mémoire doivent être programmées successivement, on pourra enchaîner les commandes de déplacement et de lecture RE et d'écriture WR, sans nécessairement effectuer systématiquement une commande d'initialisation RST après chaque commande d'écriture WR, afin de limiter le nombre de commandes à réaliser.

Cependant, les instructions doivent être communiquées avec soin par le lecteur. En effet, la programmation involontaire de certaines cellules de la mémoire peut invalider la carte, et la rendre de ce fait inutilisable.

De manière connue, les commandes de déplacement et de lecture RE, d'écriture WR et d'initialisation RST sont codées sous la forme de deux données binaires A et B, et transmises à la carte sous la forme de deux signaux binaires SA, SB, la transmission des signaux binaires SA, SB se faisant par contact direct entre des bornes de sortie du lecteur et des bornes d'entrée correspondantes de la carte. Par exemple, la commande d'initialisation RST est codée par A = 0 et B = 0, la commande de déplacement et de lecture RE est codée par A = 0 et B = 1, et la commande d'écriture WR est codée par A = 1 et B = 1, la combinaison A = 1 et B = 0 n'étant pas utilisée.

Un circuit d'entrée, interne à la carte, reçoit les deux signaux binaires SA, SB, et fournit les commandes de déplacement et de lecture RE et / ou d'écriture WR et / ou d'initialisation RST à la mémoire.

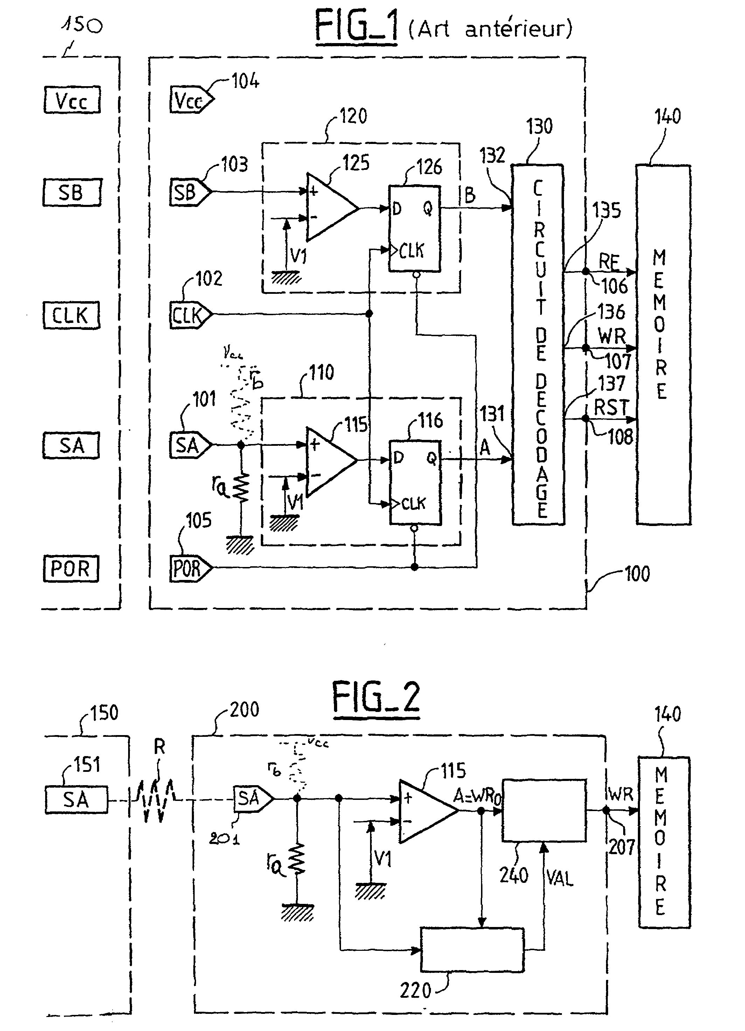

La figure 1 illustre une structure d'un tel circuit d'entrée 100, qui comprend cinq bornes d'entrée 101 à 105 sur lesquelles sont appliqués respectivement le premier signal binaire SA, un signal d'horloge CLK, le second signal binaire SB, une tension d'alimentation Vcc et un signal de mise sous tension POR. A chaque borne d'entrée du circuit 100, correspond une borne de sortie d'un lecteur 150. Des balais situés sur les bornes de sortie du lecteur 150 assurent le contact avec les bornes d'entrée de la carte lorsque celle-ci est insérée dans le lecteur.

Le circuit d'entrée comprend un premier et un second circuits de lecture 110, 120 et un circuit de décodage 130. La tension d'alimentation Vcc alimente tous les éléments du circuit d'entrée 100.

Le premier circuit de lecture 110 comprend un comparateur 115 et une bascule 116. Le comparateur 115 comprend une borne d'entrée dite positive (+) connectée à la borne d'entrée 101 du circuit d'entrée 100 et une borne d'entrée dite négative (-) sur laquelle est appliquée une première tension de référence V1. Le comparateur 115 comprend également une borne de sortie connectée à une borne d'entrée D de la bascule 116 dont des bornes d'entrée d'horloge et d'initialisation sont reliées respectivement aux bornes d'entrée 102 et 105 du circuit d'entrée 100.

Le premier circuit de lecture 110 fonctionne de la manière suivante. Le comparateur 115 compare le niveau de tension du signal SA appliqué sur sa borne d'entrée positive (+) à la première tension de référence V1 et il fournit le résultat de la comparaison sur la borne d'entrée D de la bascule 116 sous la forme d'une donnée binaire A. Lors d'un front actif du signal d'horloge CLK, la bascule 116 transmet la donnée A sur sa borne de sortie Q. La donnée binaire A est par exemple égale à "1" si le niveau de tension du signal binaire SA est supérieur à la première tension de référence V1, et à "0" sinon.

De même, le second circuit de lecture 120 comprend un comparateur 125 ayant une borne d'entrée positive (+) connectée à la borne d'entrée 103 et une borne d'entrée négative (-) sur laquelle est appliquée la première tension de référence V1. Le comparateur 125 comprend également une borne de sortie connectée à une borne d'entrée D d'une bascule 126 dont des bornes d'entrée d'horloge et d'initialisation sont reliées respectivement aux bornes d'entrée 102 et 105 du circuit d'entrée 100. Le second circuit de lecture 120 fonctionne de manière similaire au premier circuit de lecture 110 : il reçoit le signal binaire SB et produit une donnée binaire B représentative du niveau du signal binaire SB par rapport à la première tension de référence V1. La donnée binaire B est par exemple égale à "1" si le niveau du signal binaire SB est supérieur à la tension de référence V1, et à "0" sinon.

De par leur conception, les comparateur 115 et 125 possède un seuil d'hystérésis compris entre un seuil de tension VH, de l'ordre de 2 V, et un seuil de tension VL, de l'ordre de 0,8 V. Pour obtenir un bon fonctionnement des comparateurs 115, 125, on choisira de préférence une première tension de référence V1 comprise entre les seuils de tension VL et VH.

Il est à noter que les bascules 116, 126 ne sont pas indispensables au fonctionnement des circuits de lecture 110, 120. Elles permettent simplement de synchroniser les données binaires A, B arrivant sur le circuit de décodage 130.

Le circuit de décodage 130 comprend deux bornes d'entrée 131, 132 connectées respectivement à des bornes de sortie Q des bascules 116 et 126. Le circuit de décodage 130 produit, sur trois bornes de sortie 135 à 137, les trois signaux de commande de déplacement et de lecture RE, d'écriture WR et d'initialisation RST, qui sont appliqués à une mémoire 140.

Avec un tel circuit d'entrée, l'interprétation d'une instruction fournie par le lecteur se fait ainsi par décodage de l'état logique des signaux binaires SA, SB reçus sur les bornes d'entrée 101 et 103.

Cependant, il est nécessaire de protéger la carte contre des programmations involontaires de certaines cellules de la mémoire, sous peine de détruire la carte à puce. Par exemple, lorsque la carte n'est pas utilisée et que ses bornes d'entrée sont laissées flottantes, les circuits de lecture 110, 120, ne doivent pas pouvoir fournir la combinaison A = 1 et B = 1 qui correspond à la commande d'écriture WR.

Pour cela, un dispositif de protection peut être ajouté au circuit d'entrée qui privilégie une combinaison particulière lorsque les bornes d'entrée de la carte sont laissées flottantes, par exemple A = 0 et B quelconque, ou bien A = 1 et B = 0 qui correspond à la commande de déplacement et de lecture. L'état A = 1 et B = 1 correspondant à une commande d'écriture WR ainsi évité lorsque la carte est inutilisée et les risques de programmation involontaire de la carte sont minimisés.

Le dispositif de protection peut être par exemple une résistante parallèle $r_a$ telle que celle représentée sur la figure 1, une borne d'entrée de la résistance $r_a$ étant connectée à la borne d'entrée 101 et son autre borne étant reliée à la masse. Ainsi, lorsque la borne d'entrée 101 est laissée flottante, le premier circuit de lecture 110 fournit la donnée binaire A = 0.

Le dispositif de protection peut également comprendre une résistance $r_b$ telle que celle représentée en pointillés sur la figure 1, qui comprend une borne d'entrée connectée à la borne d'entrée 101 et une autre borne sur laquelle est appliquée la tension d'alimentation Vcc. Lorsque la borne d'entrée 101 est laissée flottante, le premier circuit de lecture 110 fournit alors la donnée A = 1. On aura soin dans ce cas d'ajouter au dispositif de protection une résistance $r_c$ connectée entre la borne d'entrée 103 et la masse pour assurer B = 0 et éviter ainsi la combinaison A = 1 et B = 1 correspondant à une commande d'écriture.

L'ajout d'un dispositif de protection permet ainsi de supprimer le risque de programmation involontaire de la mémoire de la carte lorsque cette dernière n'est pas utilisée. Cependant, les cartes à puce évoluent souvent dans des environnements difficiles et des programmations involontaires de certaines cellules de la mémoire peuvent également se produire avec un circuit tel que celui de la figure 1, en cours d'utilisation de la carte.

De telles erreurs d'interprétation des instructions apparaissent notamment lorsque les contacts entre les bornes de sortie du lecteur et les bornes d'entrée correspondantes de la carte sont de mauvaise qualité, lorsque qu'un balai du lecteur est défectueux ou bien, le plus souvent, lorsqu'un contact est légèrement oxydé. En effet, on constate que lorsqu'un contact est mauvais, une commande d'écriture WR peut éventuellement être interprétée comme une commande de déplacement et de lecture RE. Ou, inversement, une commande de déplacement et de lecture peut éventuellement être interprétée comme une commande d'écriture WR, avec pour conséquence une programmation involontaire d'une cellule de la mémoire et un risque d'invalidation de la carte.

Pour éliminer le risque d'invalidation de la carte en cas de mauvais contact entre la carte et les balais du lecteur, l'invention propose une carte à circuit intégré comprenant un circuit d'entrée et une mémoire accessible en écriture, le circuit d'entrée recevant un premier signal binaire transmis par contact direct entre la carte et un lecteur et produisant un signal de commande d'écriture dépendant d'une première donnée binaire pour commander la mémoire,

le circuit d'entrée comprenant un premier comparateur qui reçoit le premier signal binaire et qui produit la première donnée binaire représentative du niveau de tension du premier signal binaire par rapport à une première tension de référence,

la carte à circuit intégré étant caractérisée en ce que le circuit d'entrée comporte en outre :

- un circuit de contrôle qui reçoit le premier signal binaire et produit un signal de validation qui est inactif si le niveau de tension du premier signal binaire est compris entre la première tension de référence et une seconde tension de référence qui est différente de la première tension de référence, le signal de validation étant actif si le niveau du premier signal binaire n'est pas compris entre la première tension de référence et la seconde tension de référence,

- un circuit d'inhibition pour inhiber le signal de commande d'écriture lorsque le signal de validation est inactif.

De préférence, le premier comparateur comprend une borne d'entrée positive sur laquelle est appliqué le premier signal binaire, et une borne d'entrée négative sur laquelle est appliquée la première tension de référence, le premier comparateur fournissant la première donnée sur une borne de sortie, la première donnée étant dans un premier état logique si le niveau du premier signal binaire est supérieur à la première tension de référence et dans un second état logique sinon, et en ce que le circuit de contrôle comprend :

- un second comparateur comprenant une borne d'entrée positive sur laquelle est appliqué le premier signal binaire et une borne d'entrée négative sur laquelle est appliquée la seconde tension de référence, le second comparateur fournissant une seconde donnée sur une borne de sortie, la seconde donnée étant dans le premier état logique si le niveau du premier signal binaire est supérieur à la seconde tension de référence et dans le second état logique sinon, et

- une première porte logique comprenant deux bornes d'entrée connectées respectivement aux bornes de sortie des premier et second comparateurs et une borne de sortie pour fournir le signal de validation, le signal de validation étant actif si les première et seconde données sont dans le même état logique, le signal de validation étant inactif si les première et seconde données sont dans un état logique différent.

De préférence encore, le circuit de contrôle comprend en outre une bascule pour mémoriser et produire le signal de validation lorsqu'un front actif d'un signal d'horloge est reçu et une seconde porte logique pour maintenir le signal de validation inactif. La bascule comprend une borne d'entrée D connectée à une borne de sortie de la seconde porte logique, une borne d'entrée d'horloge sur laquelle est appliqué le signal d'horloge, une borne d'entrée d'initialisation et une borne de sortie Q pour fournir le signal de validation. La seconde porte logique comprend deux bornes d'entrée connectées respectivement à la borne de sortie de la première porte logique et à la borne de sortie Q de la bascule.

Selon un mode réalisation, le circuit d'entrée reçoit également un second signal binaire et produit un signal de commande de déplacement et de lecture et un signal de commande d'initialisation dépendant chacun des premier et second signaux binaires.

De préférence, le circuit de contrôle comprend dans ce cas une troisième porte logique pour rendre actif le signal de validation lorsqu'un signal de mise sous tension est reçu ou lorsque le signal de commande d'initialisation est produit par le circuit d'entrée, la troisième porte logique comprenant deux bornes d'entrée sur lesquelles sont appliqués respectivement le signal de mise sous tension et le signal de commande d'initialisation, et une borne de sortie connectée à la borne d'entrée d'initialisation de la bascule.

Selon un mode de réalisation, le circuit d'inhibition comprend une quatrième porte logique comprenant deux bornes d'entrée sur lesquelles sont appliqués respectivement le signal de commande d'écriture et le signal de validation, la quatrième porte logique comprenant également une borne de sortie pour fournir soit le signal de commande d'écriture si le signal de validation est actif, soit un signal de commande nul si le signal de validation est inactif.

De préférence, la carte à circuit intégré comporte en outre une borne de sortie pour fournir le signal de validation au lecteur de la carte.

De préférence enfin, la carte à circuit intégré comprend un dispositif de protection comprenant une première résistance et une seconde résistance, la première résistance étant connectée entre la borne d'entrée et la masse, la seconde résistance étant connectée entre la borne d'entrée et la borne d'entrée d'alimentation.

L'invention propose ainsi de bloquer le fonctionnement de la carte et en particulier toute opération d'écriture si le niveau du premier signal binaire est situé dans une zone d'incertitude comprise entre les première et seconde tensions de référence.

En effet, si le niveau du premier signal binaire est compris entre les première et seconde tensions de référence, on estime qu'il y a éventuellement un doute sur le niveau de tension du premier signal binaire reçu, parce que son niveau ne correspond pas à celui que lecteur a réellement appliqué (cas d'un mauvais contact). On estime dans ce cas que le niveau de tension du premier signal binaire ne peut être lu et interprété correctement par le circuit d'entrée et qu'il est préférable dans ce cas de bloquer la carte. Pour cela, le circuit de contrôle de l'invention produit un signal de validation inactif qui place la carte dans un mode bloqué et rend les signaux de commande inactifs, en particulier le signal de commande d'écriture, par l'intermédiaire du circuit d'inhibition. Aucune opération d'écriture ne peut plus avoir lieu, ce qui supprime les risques d'invalidation de la carte dus à des mauvais contacts, lors de l'utilisation de celle-ci.

Le lecteur signale alors une anomalie à l'utilisateur et lui propose d'ôter sa carte et éventuellement de la réinsérer. Si le blocage de la carte n'est dû qu'à un mauvais contact entre la carte et le lecteur, il suffit souvent de sortir la carte puis de la réinsérer dans le lecteur une ou plusieurs fois éventuellement pour nettoyer les contacts de la fine couche d'oxyde qui les recouvre. La carte n'est donc plus invalidée pour des problèmes de mauvais contact et peut être réutilisée.

Inversement, si le niveau de tension du premier signal binaire est supérieur à la première tension de référence ou inférieur à la seconde tension de référence, on estime qu'il n'y a aucun doute sur le niveau de tension du premier signal binaire, le circuit de contrôle produit dans ce cas un signal de validation actif. Le circuit d'entrée fonctionne alors de manière classique.

L'invention sera mieux comprise et d'autres caractéristiques et avantages apparaîtront à la lecture de la description qui va suivre, la description faisant référence aux dessins annexés dans lesquels :

- la figure 1 est un schéma d'un circuit d'entrée pour carte à circuit intégré à mémoire, selon l'art antérieur,
- la figure 2 est un schéma fonctionnel décrivant le principe de l'invention,
- la figure 3 est un schéma d'un circuit d'entrée d'une carte à circuit intégré à mémoire mettant en oeuvre l'invention.
- la figure 4 est un schéma d'un circuit d'entrée illustrant des améliorations possibles du circuit de la figure 3.

La figure 1 illustre un état de la technique et a été décrite précédemment. Les éléments des figures 2, 3 et 4 et ceux de la figure 1 ayant le même repère sont identiques.

La figure 2 est un schéma fonctionnel décrivant le principe de l'invention, appliqué à un circuit d'entrée 200 simplifié. Un tel circuit d'entrée 200 simplifié pourrait par exemple être utilisé dans une carte à puce à mémoire recevant un unique signal binaire.

Le circuit d'entrée 200 comprend une borne d'entrée 201 sur laquelle est appliqué un premier signal binaire SA par l'intermédiaire d'un lecteur 150, et il produit un signal de commande d'écriture WR sur une borne de sortie 207 pour commander une mémoire 140. Le circuit d'entrée 200 comprend un premier comparateur 115, un circuit de contrôle 220, un circuit d'inhibition 240 et un dispositif de protection constitué par exemple d'une résistance parallèle $r_a$ dont une borne est connectée à la borne d'entrée 201 et dont l'autre borne est connectée à la masse du circuit.

Le premier comparateur 115 est identique à celui de la figure 1. Sa borne d'entrée positive est connectée à la borne d'entrée 201 pour recevoir le signal binaire SA et la première tension de référence V1 est appliquée sur sa borne d'entrée négative. Le comparateur 115 produit un signal $WR_0$ qui est actif, par exemple égal à "1", si le niveau du premier signal binaire SA est supérieur à la première tension de référence V1, et inactif sinon, par exemple égal à "0".

Le circuit de contrôle 220 comprend deux bornes d'entrée connectées respectivement à la borne d'entrée 201 et à la borne de sortie du comparateur 115. Le circuit de contrôle produit, sur une borne de sortie, un signal de validation VAL ayant les caractéristiques suivantes. Si le niveau de tension du signal binaire SA est supérieur à la première tension de référence V1 ou inférieur à une seconde tension de référence V2, alors le signal de validation VAL est actif et il est par exemple dans un état logique égal à "1". Dans le cas contraire, c'est à dire si le niveau de tension du premier signal binaire SA est compris entre les première et seconde tensions de référence V1, V2, alors le signal de validation VAL est inactif, il est par exemple dans un second état logique égal à "0", et il est maintenu inactif jusqu'à la réinitialisation du circuit de contrôle 220.

On choisira de préférence les première et seconde tensions de référence proches des seuils de tension VH et VL, par exemple V1 compris entre 0,8 et 2 V et V2 de l'ordre de 0,8 V. Ainsi le signal de validation VAL sera inactif dans la zone de fonctionnement incertain du comparateur 115 ou s'il y a un doute sur le niveau de tension du signal SA réellement reçu sur la borne d'entrée 201 du circuit d'entrée 200.

Le circuit d'inhibition 240 reçoit le signal $WR_0$ et le signal de validation VAL et il produit un signal de commande d'écriture WR ayant les caractéristiques suivantes. Si le signal de validation VAL est actif, alors le signal de commande d'écriture WR est égal au signal $WR_0$. Inversement, si le signal de validation VAL est inactif, le signal de commande d'écriture WR est maintenu inactif, par exemple dans un état logique égal à "0".

Il est à noter que, dans le cas d'un circuit d'entrée selon l'art antérieur, mais recevant un unique signal binaire SA et produisant un unique signal de commande $WR_0$, l'ensemble constitué par les premier et second circuits de lecture 110, 120 et le circuit de décodage 130 peut se réduire au seul comparateur 115. En effet, si un seul signal SA est reçu par le circuit d'entrée, le second circuit de lecture 120 devient inutile et peut être supprimé, de même que le circuit de décodage 130 ; le signal de commande $WR_0$ est dans ce cas égal à la donnée binaire A produite par le premier circuit de lecture 110. De plus, la bascule 116 n'est pas indispensable et peut être supprimée puisqu'il n'y a plus qu'un seul signal binaire SA à synchroniser avec lui-même.

L'ensemble constitué des premier et second circuits de lecture 110, 120 et du circuit de décodage 130 se résume donc bien à un comparateur 115, dans le cas où on considère une carte à puce recevant des instructions sous la forme d'un unique signal binaire SA.

Pour décrire plus complètement le fonctionnement du circuit d'entrée 200 de la figure 2, il est nécessaire de décrire les conséquences d'un mauvais contact entre le lecteur 150 et la carte à puce.

Un contact entre une borne de sortie 151 du lecteur et la borne d'entrée correspondante 201 de la carte peut être modélisé par une résistante série R, telle que celle représentée en pointillés sur la figure 2. Du fait de la présence de la résistance parallèle $r_a$, un pont diviseur de tension s'établit entre les résistances R et $r_a$.

Par exemple, si une opération d'écriture de la mémoire est envisagée, on souhaite obtenir un signal de commande d'écriture WR actif en sortie du circuit d'entrée 200. Pour cela, on applique une tension égale à la tension d'alimentation Vcc du circuit (non représentée sur la figure 2) sur la borne de sortie 151 du lecteur, le signal binaire SA sur la borne d'entrée correspondante 201 de la carte est alors à un niveau de tension égal

à Vcc\*$r_a$/ (R+$r_a$).

Si le contact est de bonne qualité, la résistance R est nulle et le signal binaire SA est à un niveau de tension égal à Vcc ; Le premier comparateur 115 fournit le signal souhaité, c'est-à-dire $WR_0$ = "1". De plus, le niveau de tension du signal SA étant supérieur à la première tension de référence V1, le signal de validation VAL produit par le circuit de contrôle est actif, le signal de commande d'écriture WR est donc égal à $WR_0$ ; une opération d'écriture peut alors être exécutée si WR = 1.

Si le contact entre la borne de sortie 151 du lecteur et la borne d'entrée correspondante 201 de la carte est de mauvaise qualité, la résistance R peut atteindre une valeur telle que, lorsqu'on applique une tension égale à la tension d'alimentation Vcc sur la borne de sortie 151 du lecteur, le signal SA qui apparaît sur la borne d'entrée 101 est à un niveau de tension compris entre la première et la seconde tensions de référence V1, V2 ; le premier comparateur 115 fournit $WR_0$ = "0" alors que l'on souhaitait obtenir $WR_0$ = "1".

En parallèle, puisque le niveau de tension du signal SA est compris entre la première et la seconde tension de référence V1, V2, le circuit de contrôle fournit un signal de validation VAL inactif, et le signal de commande d'écriture WR produit par le circuit d'inhibition 240 est maintenu inactif, égal à "0". Ainsi, quel que soit le signal $WR_0$, le signal de commande d'écriture WR est maintenu inactif lorsque le niveau de tension du signal SA reçu est compris entre la première et la seconde tension de référence V1, V2. La carte est donc bloquée car aucune programmation volontaire ou involontaire de la mémoire n'est plus possible. Le risque d'invalidation de la carte en cas de mauvais contact est donc supprimé.

Le principe de l'invention a été décrit dans le cas où le dispositif de protection est constitué d'une résistance parallèle $r_a$ connectée entre la borne d'entrée 201 et la masse. L'invention peut cependant également être utilisée si le dispositif de protection est constitué une résistance $r_b$ (représentée en pointillés sur la figure 2) comprenant une borne connectée à la borne d'entrée 201 et une autre borne sur laquelle est appliquée la tension d'alimentation Vcc. Simplement, on choisira dans ce cas la première tension de référence V1 inférieure à la seconde tension de référence V2, par exemple V1 de l'ordre de 0,8 V et V2 de l'ordre de 2 V.

Si une aucune opération d'écriture de la mémoire n'est envisagée, on souhaite obtenir un signal de commande d'écriture WR inactif en sortie du circuit d'entrée 200. Pour cela, on applique une tension nulle sur la borne de sortie 151 du lecteur, le signal binaire SA sur la borne d'entrée 201 de la carte est alors à un niveau de tension égal à Vcc \* R / (R+rb).

Si le contact entre le lecteur et la carte est de bonne qualité, alors la résistance R est nulle et le signal SA est nul également. Le premier comparateur fournit le signal de commande souhaité, c'est à dire WR = "0". Inversement, si le contact entre la carte et le lecteur est mauvais, la résistance R peut prendre une valeur telle que le niveau de tension du signal SA est compris entre la première et la seconde tensions de référence. Le premier comparateur fournit alors $WR_0$ = 1 alors que l'on souhaitait obtenir $WR_0$ = 0. Cependant, le circuit de contrôle produit un signal VAL inactif et le signal de commande d'écriture WR est maintenu inactif. La carte est donc bloquée et aucune programmation involontaire de la carte n'est plus possible.

L'invention peut également être mise en oeuvre sur des circuits d'entrée plus complexes tels que celui de la figure 1 par exemple.

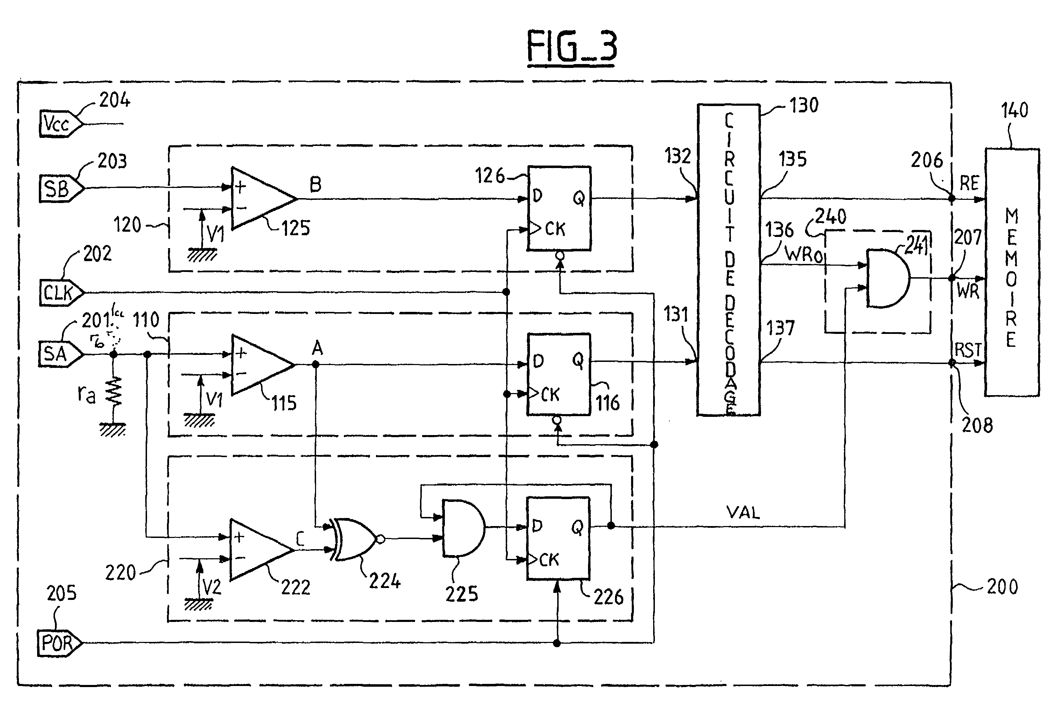

Le schéma de la figure 3 a été modifié par rapport à celui de la figure 1 de la manière suivante. Un circuit de contrôle 220 et un circuit d'inhibition 240 ont été ajoutés.

Le circuit de contrôle 220 comprend un comparateur 222, deux portes logiques 224, 225 et une bascule 226. Le comparateur 222 est identique au comparateur 115 ; sa borne d'entrée positive (+) est connectée à la borne d'entrée 101 et la seconde tension de référence V2 est appliquée sur sa borne d'entrée négative (-). Le comparateur 222 fournit une donnée binaire C égale à "1" si le niveau de tension du premier signal binaire SA est supérieur à la seconde tension de référence V2 et égal à "0" sinon.

La porte logique 224 est par exemple de type NON-OU-Exclusif et comprend deux bornes d'entrée connectées respectivement aux bornes de sortie des comparateurs 115 et 222. La porte logique 225 est de préférence de type ET et comprend deux bornes d'entrée et une borne de sortie.

La bascule 226 comprend une borne d'entrée de données D, une borne d'entrée d'horloge CK et une borne d'initialisation non inverseuse, reliées respectivement à la borne de sortie de la porte logique 225 et aux bornes d'entrée 102 et 105 du circuit d'entrée 200. La bascule 226 comprend également une borne de sortie connectée à la borne de sortie du circuit de contrôle 220 pour fournir le signal de validation VAL et d'autre part à une entrée de la porte logique 225 dont dont l'autre entrée est connectée à une borne de sortie de la porte logique 224. La bascule 226 n'est pas indispensable à la mise en oeuvre de l'invention et elle peut éventuellement être supprimée. Elle améliore simplement le fonctionnement global du circuit en synchronisant sur un même signal d'horloge CLK, le signal de validation VAL et les données binaires A et B transmises au circuit de décodage 130.

Le circuit d'inhibition 240 de la figure 3 comprend une porte logique 241, par exemple de type ET, ayant deux bornes d'entrée connectées respectivement à la borne de sortie 136 du circuit de décodage pour recevoir le signal de commande $WR_0$ et à la borne de sortie Q de la bascule 226 pour recevoir le signal de validation VAL. La porte logique 241 comprend également une borne de sortie reliée à la borne de sortie 207 du circuit d'entrée 200 pour fournir le signal de commande d'écriture WR tel que :

$$WR = WR_0 \qquad \text{si VAL} = 1$$

$$WR = 0 \qquad \text{si VAL} = 0$$

La porte ET 241 n'est qu'un exemple de réalisation du circuit d'inhibition de l'invention, l'essentiel étant de réaliser un circuit qui maintienne le signal de commande d'écriture WR dans un état inactif lorsque le signal de validation est inactif. Par exemple, On pourrait également utiliser un circuit d'inhibition comprenant un circuit de commutation qui commute le signal de commande d'écriture WR entre le signal $WR_0$ et un signal identiquement nul.

Le fonctionnement global du circuit d'entrée 200 de la figure 3 est le suivant. Lors de l'insertion de la carte dans le lecteur et de la mise sous tension de la carte, le signal POR initialise les bascules 116, 126 et 226. Le signal de validation VAL est activé : VAL = "1". Le circuit de décodage 130 reçoit des "0" logiques sur ses bornes d'entrée 131 et 132 et il produit les signaux RE = "0", RST = "1" et $WR_0$ = "0". En conséquence, le signal WR est nul.

Lorsqu'une instruction est communiquée à la carte par le lecteur, le circuit d'entrée 200 reçoit les signaux binaires SA, SB. Les premier et second circuits de lecture 110, 120 fournissent les données binaires A et B représentatives de l'état logique des signaux binaires SA, SB. Le circuit de décodage 130 fournit les signaux RE, $WR_0$ et RST correspondants.

En parallèle, si le niveau de tension du signal binaire SA est supérieur à la première tension de référence V1 ou inférieur à la seconde tension de référence V2, le comparateur 115 du premier circuit de lecture 110 et le comparateur 222 du circuit de contrôle 220 fournissent le même résultat et la porte logique 224 produit un signal actif égal à "1". La porte 225 reçoit deux signaux actifs sur ses deux bornes d'entrée et produit un signal de validation VAL actif sur la borne d'entrée D de la bascule 226. Lors d'un front actif du signal d'horloge CLK, la bascule 226 transmet le signal de validation VAL sur la borne de sortie du circuit de contrôle.

Le circuit d'inhibition 240 fournit alors un signal de commande d'écriture WR égal au signal de commande $WR_0$.

Si, par contre, le niveau de tension du signal SA est inférieur à la première tension de référence V1 et supérieur à la seconde tension de référence V2, les comparateurs 115 et 222 fournissent des résultats différents. On estime dans ce cas que le signal SA ne peut être lu et interprété correctement par le circuit d'entrée dans la mesure où il peut y avoir un doute sur le niveau de tension réel du signal SA reçu sur la borne d'entrée 201 et la porte logique 224 fournit un signal inactif. La porte 225 recevant un signal inactif sur au moins une de ses entrées, elle fournit un signal de validation VAL inactif sur la borne d'entrée D de la bascule 226. Lors d'un front actif du signal d'horloge CLK, la bascule 226 transfert le signal de validation VAL inactif sur la borne de sortie du circuit de contrôle. Le circuit d'inhibition 240 fournit alors un signal de commande d'écriture WR égal à "0" : la commande d'écriture est ainsi inhibée.

Si, ensuite, le niveau de tension du signal SA redevient supérieur à V1 ou inférieur à V2, le comparateur 115 du premier circuit de lecture 110 et le comparateur 222 du circuit de contrôle 220 fournissent le même résultat et la porte logique 224 produit un signal actif égal à "1". Le signal de validation VAL étant précédemment inactif, une des bornes d'entrée de la porte 225 reçoit un signal inactif et la porte produit un signal VAL inactif sur la borne d'entrée D de la bascule 226. Le signal de validation VAL est donc maintenu inactif, et aucune opération d'écriture n'est plus possible, même si le niveau de tension du signal SA retrouve une valeur correcte, proche de zéro ou proche de Vcc. Le signal de validation VAL doit être réinitialisé, dans notre exemple par un signal POR, pour pouvoir réutiliser la carte.

Dans l'exemple de réalisation de l'invention ci-dessus, le circuit de contrôle 220 et le circuit d'inhibition 240 sont utilisés pour contrôler le niveau de tension du signal SA et inhiber le signal de commande d'écriture WR dans le cas où le dispositif de protection est constitué d'une résistance parallèle $r_a$ connectée entre la borne d'entrée 201 et la masse.

L'invention peut cependant également être mise en oeuvre si le dispositif de protection est constitué d'une résistance $r_b$ (représentée en pointillés sur la figure 2) comprenant une borne connectée à la borne d'entrée 201 et une autre borne sur laquelle est appliquée la tension d'alimentation Vcc. Dans ce cas, le circuit de contrôle et le circuit d'inhibition de l'invention sont identiques à ceux de l'exemple précédent. Simplement, on choisira de préférence la première tension de référence V1 inférieure à la seconde tension de référence V2, par exemple V1 de l'ordre de 0,8 V et V2 de l'ordre de 2 V.

De même, les circuits de contrôle 220 et d'inhibition 240 de l'invention peuvent être utilisés pour contrôler le niveau de tension du signal SB. Il est également possible d'utiliser un circuit de contrôle simplifié, comprenant simplement un comparateur, identique aux comparateurs 115, 125 ou 222, pour vérifier le niveau de tension sur toute autre borne d'entrée de la carte.

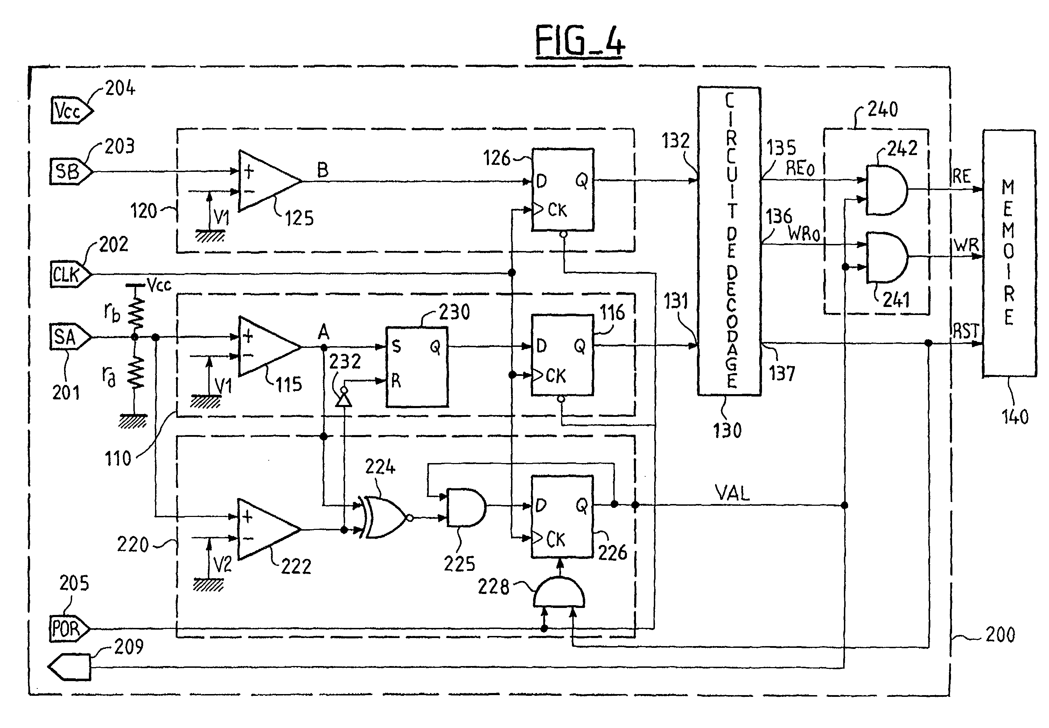

La figure 4 est un schéma d'un circuit d'entrée 200 illustrant des améliorations possibles de l'invention. Chacune de ces améliorations peut être utilisée séparément ou avec d'autres, sans modifier le fonctionnement de base de l'invention.

Une première amélioration de l'invention est obtenue en utilisant un dispositif de protection comprenant une résistance $r_a$ et une résistance $r_b$. La résistance $r_a$ est connectée entre la borne d'entrée 201 et la masse et la résistance $r_b$ est connectée entre la borne d'entrée 201 et la borne d'entrée d'alimentation 205. Les valeurs des résistances $r_a$ et $r_b$ sont choisies de préférence de sorte que lorsque la borne d'entrée 201 est laissée flottante, la tension sur la borne d'entré 201 soit comprise entre les première et seconde tensions de référence V1, V2. Avec un tel dispositif de protection, le circuit de contrôle fournit un signal de validation inactif lorsque la carte est inutilisée et aucune opération d'écriture de la mémoire ne peut être réalisée.

Dans la pratique, les résistances $r_a$, $r_b$ sont réalisées à l'aide de transistors très résistifs qui polarisent très légèrement la borne d'entrée 201, c'est-à-dire que très peu de courant circule dans les résistances $r_a$, $r_b$ lorsque la borne d'entrée 201 est laissée flottante. Inversement, lorsque la carte est inserrée dans le lecteur, le lecteur impose, sur la borne 201, un courant et une tension de valeurs suffisantes pour supprimer l'effet des résistances $r_a$, $r_b$. Les résistances $r_a$, $r_b$ ne modifient donc pas le fonctionnment normal du circuit d'entrée 200 lorsque la carte est inserrée dans le lecteur

Une autre amélioration de l'invention consiste à ajouter au circuit d'entrée 200 une borne de sortie 209 reliée à la borne de sortie Q de la bascule 226. Le lecteur est ainsi immédiatement averti si il y a un doute sur le niveau du signal SA.

Il est également possible d'ajouter au circuit de contrôle 220 une porte logique 228 comprenant deux bornes d'entrée connectées respectivement à la borne d'entrée 205 pour recevoir le signal de mise sous tension POR et à la borne de sortie 136 du circuit de décodage 130 pour recevoir le signal de commande d'initialisation RST. La porte 228 comprend également une borne de sortie reliée à la borne d'entrée d'initialisation de la bascule 226. La porte 228 est par exemple de type OU ; elle permet de rendre le signal de validation VAL actif, c'est-à-dire de le mettre à "1" soit avec le signal de mise sous tension POR soit avec le signal d'initialisation RST. Ainsi si une lecture du chiffre A est effectuée correctement après une mauvaise lecture, il n'est plus nécessaire de réinitialiser complètement le circuit d'entrée par un signal POR. On évite ainsi entre autre de perdre les données contenues dans les bascules autres que la bascule 226 du circuit d'entrée.

L'invention peut également être améliorée par l'ajout, au circuit d'inhibition 240, d'une porte logique 242 comprenant deux bornes d'entrée et une borne de sortie. La porte logique 242 reçoit le signal de commande de lecture RE sur une première borne d'entrée et le signal de validation VAL sur une seconde borne d'entrée. La porte logique 242 permet ainsi d'inhiber la commandes de déplacement et de lecture RE de la mémoire.

Le circuit d'inhibition 240 pourrait également être utilisé pour inhiber le signal d'initialisation RST, par exemple en ajoutant une porte ET 243. Cependant, cette amélioration ne peut être mise en oeuvre si le circuit de contrôle 220 comprend la porte logique 228. En effet, si le signal RST est maintenu inactif par le circuit d'inhibition 240, il ne peut être utilisé comme signal d'initialisation pour le circuit de contrôle 220.

Une autre amélioration possible de l'invention consiste à ajouter une bascule 230 et un inverseur 232 au circuit de lecture 110. La bascule 230 est par exemple une structure de mémorisation bistable et non synchronisée, couramment appelée bascule RS ; elle comprend deux bornes d'entrée R et S reliées respectivement à la borne de sortie du comparateur 222 par l'intermédiaire de l'inverseur 232 et à la borne de sortie du comparateur 115. Enfin, la bascule 230 comprend une borne de sortie Q reliée à la borne d'entrée D de la bascule 116.

L'ensemble comprenant les comparateurs 115, 222, la bascule 230 et l'inverseur 232 constitue un circuit équivalent à un comparateur à hystérésis, couramment appelé trigger de Schmit, et qui fonctionne de la manière suivante. Initialement, on supposera que le niveau du signal SA est inférieur aux tensions de référence V1 et V2 appliquées aux bornes d'entrée négatives des comparateurs 115 et 222. Ainsi, les comparateurs 115 et 222 fournissent un "0" sur leur borne de sortie, la bascule 230 reçoit respectivement un "0" et un "1" logique sur ses bornes d'entrée S et R, elle fournit donc un "0" logique sur sa borne de sortie "Q". On supposera également que la tension de référence V1 est supérieure à la tension de référence V2.

Si le niveau de tension du signal SA augmente et dépasse la seconde tension de référence V2, la sortie du comparateur 222 passe à "1" et la sortie du comparateur 115 reste à "0". La borne d'entrée R de la bascule 230 change d'état mais sa borne de sortie Q reste à "0". Si le niveau de tension du signal SA augmente encore et dépasse la première tension de référence V1, la borne de sortie du comparateur 115 change d'état, ainsi que la borne d'entrée S de la bascule 230, ce qui a pour conséquence le passage à "1" de sa borne de sortie.

**Revendications**

**1.** Carte à circuit intégré comprenant un circuit d'entrée (200) et une mémoire (140) accessible en écriture, le circuit d'entrée (200) recevant un premier signal binaire (SA) transmis par contact direct entre la carte et un lecteur (150) et produisant un signal de commande d'écriture (WR) dépendant d'une première donnée (A) binaire pour commander la mémoire (140),

le circuit d'entrée comprenant un premier comparateur (115) qui reçoit le premier signal binaire (SA) et qui produit la première donnée (A) binaire représentative du niveau de tension du premier signal binaire (SA) par rapport à une première tension de référence (V1),
la carte à circuit intégré étant **caractérisée en ce que** le circuit d'entrée (200) comporte en outre :

- un circuit de contrôle (220) qui reçoit le premier signal binaire (SA) et produit un signal de validation (VAL) qui est inactif si le niveau de tension du premier signal binaire (SA) est compris entre la première tension de référence (V1) et une seconde tension de référence (V2) qui est différente de la première tension de référence (V1), le signal de validation (VAL) étant actif si le niveau du premier signal binaire (SA) n'est pas compris entre la première tension de référence (V1) et la seconde tension de référence (V2),

- un circuit d'inhibition (240) pour inhiber le signal de commande d'écriture (WR) lorsque le signal de validation (VAL) est inactif.

2. Carte à circuit intégré selon la revendication 1, **caractérisée en ce que** le premier comparateur comprend une borne d'entrée positive (+) sur laquelle est appliqué le premier signal binaire (SA), et une borne d'entrée négative (-) sur laquelle est appliquée la première tension de référence (V1), le premier comparateur fournissant la première donnée (A) sur une borne de sortie, la première donnée (A) étant dans un premier état logique ("1") si le niveau du premier signal binaire (SA) est supérieur à la première tension de référence (V1) et dans un second état logique ("0") sinon,

et **en ce que** le circuit de contrôle (220) comprend :

- un second comparateur (222) comprenant une borne d'entrée positive (+) sur laquelle est appliqué le premier signal binaire (SA) et une borne d'entrée négative (-) sur laquelle est appliquée la seconde tension de référence (V2), le second comparateur (222) fournissant une seconde donnée (C) sur une borne de sortie, la seconde donnée (C) étant dans le premier état logique ("1") si le niveau du premier signal binaire (SA) est supérieur à la seconde tension de référence (V2) et dans le second état logique ("0") sinon, et

- une première porte logique (224) comprenant deux bornes d'entrée connectées respectivement aux bornes de sortie des premier (115) et second (222) comparateurs et une borne de sortie pour fournir le signal de validation (VAL), le signal de validation (VAL) étant actif si les première et seconde données (A, C) sont dans le même état logique, le signal de validation (VAL) étant inactif si les première et seconde données (A, C) sont dans un état logique différent.

3. Carte à circuit intégré selon la revendication 2, dans laquelle le circuit de contrôle (220) comprend en outre une bascule (226) pour mémoriser et produire le signal de validation (VAL) lorsqu'un front actif d'un signal d'horloge (CLK) est reçu et une seconde porte logique (225) pour maintenir le signal de validation (VAL) inactif.

4. Carte à circuit intégré selon la revendication 2 ou 3, **caractérisée en ce que** la bascule (226) comprend une borne d'entrée D connectée à une borne de sortie de la seconde porte logique (225), une borne d'entrée d'horloge (CK) sur laquelle est appliqué le signal d'horloge (CLK), une borne d'entrée d'initialisation et une borne de sortie Q pour fournir le signal de validation (VAL) et

**caractérisée en ce que** la seconde porte logique (225) comprend deux bornes d'entrée connectées respectivement à la borne de sortie de la première porte logique (224) et à la borne de sortie Q de la bascule (226)

5. Carte à circuit intégré selon l'une des revendications 1 à 4, dans laquelle le circuit d'entrée (200) reçoit également un second signal binaire (SB) et produit un signal de commande de déplacement et de lecture (RE) et un signal de commande d'initialisation (RST) dépendant chacun des premier (SA) et second (SB) signaux binaires.

6. Carte à circuit intégré selon la revendication 5, dans laquelle le circuit de contrôle (220) comprend en outre une troisième porte logique (228) pour rendre actif le signal de validation (VAL) lorsqu'un signal de mise sous tension (POR) est reçu ou lorsque le signal de commande d'initialisation (RST) est produit par le circuit d'entrée (200), la troisième porte logique (228) comprenant deux bornes d'entrée sur lesquelles sont appliqués respectivement le signal de mise sous tension (POR) et le signal de commande d'initialisation, et une borne de sortie connectée à la borne d'entrée d'initialisation de la bascule (226).

7. Carte à circuit intégré selon l'une des revendications 1 à 6, dans laquelle le circuit d'inhibition (240) comprend une quatrième porte logique (241) comprenant deux bornes d'entrée sur lesquelles sont appliqués respectivement le signal de commande d'écriture (WR) et le signal de validation (VAL), la quatrième porte logique (241) comprenant également une borne de sortie pour fournir soit le signal de commande d'écriture (WR) si le signal de validation (VAL) est actif, soit un signal de commande nul si le signal de validation (VAL) est inactif.

8. Carte à circuit intégré selon l'une des revendications 5 à 7, dans laquelle le circuit d'inhibition (240) comprend également une cinquième porte logique (242) comprenant deux bornes d'entrée sur lesquelles sont appliqués respectivement le signal de commande de déplacement et de lecture (RE) et le signal de validation (VAL), la cinquième porte logique (242) comprenant également une borne de sortie pour fournir soit le signal de commande de déplacement et de lecture (RE) si le signal de validation (VAL) est actif, soit un signal de commande nul si le signal de validation (VAL) est inactif.

9. Carte à circuit intégré selon l'une des revendications 1 à 8, **caractérisée en ce qu'**elle comporte en outre une borne de sortie (209) pour fournir le signal de validation (VAL) au lecteur (150) de la carte.

10. Carte à circuit intégré selon l'une des revendication là 9, **caractérisée en ce qu'**elle comprend un dispositif de protection comprenant une première résistance ($r_a$) et une seconde résistance ($r_b$), la première résistance étant connectée entre la borne d'entrée (201) et la masse, la seconde résistance étant connectée entre la borne d'entrée (201) et la borne d'entrée d'alimentation (204).

**Patentansprüche**

1. IC-Karte, die eine Eingangsschaltung (200) und einen im Schreibmodus zugänglichen Speicher (140) aufweist, wobei die Eingangsschaltung (200) ein erstes Binärsignal (SA) empfängt, das durch direkten Kontakt zwischen der Karte und einem Lesegerät (150) übertragen wird, und ein von einem ersten Binärdatenwert (A) abhängiges Schreibsteuersignal (WR) zur Steuerung des Speichers (140) erzeugt, wobei die Eingangsschaltung einen ersten Komparator (115) aufweist, der das erste Binärsignal (SA) empfängt und der den ersten Binärdatenwert (A) erzeugt, der für den Spannungspegel des ersten Binärsignals (SA) in bezug auf eine erste Bezugsspannung (V1) repräsentativ ist,
wobei die IC-Karte **dadurch gekennzeichnet ist, daß** die Eingangsschaltung (200) weiter aufweist:

- eine Steuerschaltung (220), die das erste Binärsignal (SA) empfängt und ein Validierungssignal (VAL) erzeugt, das inaktiv ist, wenn der Spannungspegel des ersten Binärsignals (SA) zwischen der ersten Bezugsspannung (V1) und einer zweiten Bezugsspannung (V2) liegt, die sich von der ersten Bezugsspannung (V1) unterscheidet,

wobei das Validierungssignal (VAL) aktiv ist, wenn der Pegel des ersten Binärsignals (SA) nicht zwischen der ersten Bezugsspannung (V1) und der zweiten Bezugsspannung (V2) liegt,

- eine Sperrschaltung (240), um das Schreibsteuersignal (WR) zu sperren, wenn das Validierungssignal (VAL) inaktiv ist.

2. IC-Karte nach Anspruch 1, **dadurch gekennzeichnet, daß** der erste Komparator eine positive Eingangsklemme(+), an die das erste Binärsignal (SA) angelegt wird, und eine negative Eingangsklemme (-) aufweist, an die die erste Bezugsspannung (V1) angelegt wird, wobei der erste Komparator den ersten Datenwert (A) an einer Ausgangsklemme liefert, wobei der erste Datenwert (A) sich in einem ersten logischen Zustand ("1") befindet, wenn der Pegel des ersten Binärsignals (SA) höher ist als die erste Bezugsspannung (V1), und sonst in einem zweiten logischen Zustand ("0"),
und daß die Steuerschaltung (220) aufweist:

- einen zweiten Komparator (222), der eine positive Eingangsklemme (+), an die das erste Binärsignal (SA) angelegt wird, und eine negative Eingangsklemme (-) aufweist, an die die zweite Bezugsspannung (V2) angelegt wird, wobei der zweite Komparator (222) einen zweiten Datenwert (C) an einer Ausgangsklemme liefert, wobei der zweite Datenwert (C) sich im ersten logischen Zustand ("1") befindet, wenn der Pegel des ersten Binärsignals (SA) höher ist als die zweite Bezugsspannung (V2), und sonst im zweiten logischen Zustand ("0"), und
- ein erstes Logikgatter (224), das zwei Eingangsklemmen, die je mit den Ausgangsklemmen des ersten (115) bzw. zweiten Komparators (222) verbunden sind, und eine Ausgangsklemme aufweist, um das Validierungssignal (VAL) zu liefern, wobei das Validierungssignal (VAL) aktiv ist, wenn der erste und der zweite Datenwert (A, C) im gleichen logischen Zustand sind, wobei das Validierungssignal (VAL) inaktiv ist, wenn der erste und der zweite Datenwert (A, C) unterschiedliche logische Zustände aufweisen.

3. IC-Karte nach Anspruch 2, bei der die Steuerschaltung (220) außerdem eine Kippstufe (226), um das Validierungssignal (VAL) zu speichern und zu erzeugen, wenn eine aktive Front eines Taktsignals (CLK) empfangen wird, und ein zweites Logikgatter (225) aufweist, um das Validierungssignal inaktiv zu halten.

4. IC-Karte nach Anspruch 2 oder 3, **dadurch gekennzeichnet, daß** die Kippstufe (226) eine Eingangsklemme D, die mit einer Ausgangsklemme des zweiten Logikgatters (225) verbunden ist, eine Takteingangsklemme (CK), an die das Taktsignal (CLK) angelegt wird, eine Initialisierungs-Eingangsklemme und eine Ausgangsklemme Q aufweist, um das Validierungssignal zu liefern, und **dadurch gekennzeichnet, daß** das zweite Logikgatter (225) zwei Eingangsklemmen aufweist, die je mit der Ausgangsklemme des ersten Logikgatters (224) bzw. mit der Ausgangsklemme Q der Kippstufe (226) verbunden sind.

5. IC-Karte nach einem der Ansprüche 1 bis 4, bei der die Eingangsschaltung (200) auch ein zweites Binärsignal (SB) empfängt und ein Verschiebe- und Lesesteuersignal (RE) und ein Initialisierungssteuersignal (RST) erzeugt, die je vom ersten (SA) und zweiten Binärsignal (SB) abhängen.

6. IC-Karte nach Anspruch 5, bei der die Steuerschaltung (220) außerdem ein drittes Logikgatter (228) aufweist, um das Validierungssignal (VAL) aktiv zu machen, wenn ein Unterspannungsetzungssignal (POR) empfangen wird oder wenn das Initialisierungssteuersignal (RST) von der Eingangsschaltung erzeugt (200) wird, wobei das dritte Logikgatter (228) zwei Eingangsklemmen, an die je das Unterspannungsetzungssignal (POR) bzw. das Initialisierungssteuersignal angelegt werden, und eine Ausgangsklemme aufweist, die mit der Initialisierungs-Eingangsklemme der Kippstufe (226) verbunden ist.

7. IC-Karte nach einem der Ansprüche 1 bis 6, bei der die Sperrschaltung (240) ein viertes Logikgatter (241) aufweist, das zwei Eingangsklemmen aufweist, an je die das Schreibsteuersignal (WR) bzw. das Validierungssignal (VAL) angelegt werden, wobei das vierte Logikgatter (241) auch eine Ausgangsklemme aufweist, um entweder das Schreibsteuersignal (WR), wenn das Validierungssignal (VAL) aktiv ist, oder ein Steuersignal Null zu liefern, wenn das Validierungssignal (VAL) inaktiv ist.

8. IC-Karte nach einem der Ansprüche 5 bis 7, bei der die Sperrschaltung (240) auch ein fünftes Logikgatter (242) aufweist, das zwei Eingangsklemmen besitzt, an die je das Verschiebe- und Lesesteuersignal (RE) bzw. das Validierungssignal (VAL) angelegt werden, wobei das fünfte Logikgatter (242) auch eine Ausgangsklemme aufweist, um entweder das Verschiebe- und Lesesteuersignal (RE), wenn das Validierungssignal (VAL) aktiv ist, oder ein Steuersignal Null zu liefern, wenn das Validierungssignal (VAL) inaktiv ist.

9. IC-Karte nach einem der Ansprüche 1 bis 8, **dadurch gekennzeichnet, daß** sie außerdem eine Ausgangsklemme (209) aufweist, um das Validierungssignal (VAL) an das Kartenlesegerät (150) zu liefern.

10. IC-Karte nach einem der Ansprüche 1 bis 9, **da-**

**durch gekennzeichnet, daß** sie eine Schutzvorrichtung enthält, die einen ersten Widerstand ($r_a$) und einen zweiten Widerstand ($r_b$) aufweist, wobei der erste Widerstand zwischen die Eingangsklemme (201) und Masse geschaltet ist, während der zweite Widerstand zwischen die Eingangsklemme (201) und die Speiseeingangsklemme (204) geschaltet ist.

**Claims**

1. Integrated-circuit card comprising an input circuit (200) and a memory (140) which is accessible in write mode, the input circuit (200) receiving a first binary signal (SA) transmitted by direct contact between the card and a reader (150) and producing a write-command signal (WR) depending on a first binary data item (A) for controlling the memory (140), the input circuit comprising a first comparator (115) which receives the first binary signal (SA) and which produces the first binary data item (A) representative of the voltage level of the first binary signal (SA) with respect to a first reference voltage (V1), the integrated-circuit card being **characterised in that** the input circuit (200) further includes:

   - a monitoring circuit (220) which receives the first binary signal (SA) and produces a validation signal (VAL) which is inactive if the voltage level of the first binary signal (SA) lies between the first reference voltage (V1) and a second reference voltage (V2) which is different from the first reference voltage (V1), the validation signal (VAL) being active if the level of the first binary signal (SA) does not lie between the first reference voltage (V1) and the second reference voltage (V2),
   - an inhibition circuit (240) for inhibiting the write-command signal (WR) when the validation signal (VAL) is inactive.

2. Integrated-circuit card according to Claim 1, **characterised in that** the first comparator comprises a positive input terminal (+) onto which the first binary signal (SA) is applied, and a negative input terminal (-) onto which the first reference voltage (V1) is applied, the first comparator supplying the first data item (A) on an output terminal, the first data item (A) being in a first logic state ("1") if the level of the first binary signal (SA) is above the first reference voltage (V1) and in a second logic state ("0") otherwise, and **in that** the monitoring circuit (220) comprises:

   - a second comparator (222) comprising a positive input terminal (+) onto which the first binary signal (SA) is applied and a negative input terminal (-) onto which the second reference voltage (V2) is applied, the second comparator (222) supplying a second data item (C) on an output terminal, the second data item (C) being in the first logic state ("1") if the level of the first binary signal (SA) is higher than the second reference voltage (V2) and in the second logic state ("0") otherwise, and

- a first logic gate (224) comprising two input terminals connected to the output terminals of the first (115) and second (222) comparators respectively, and an output terminal for supplying the validation signal (VAL), the validation signal (VAL) being active if the first and second data items (A, C) are in the same logic state, the validation signal (VAL) being inactive if the first and second data items (A, C) are in a different logic state.

3. Integrated-circuit card according to Claim 2, in which the monitoring circuit (220) further comprises a flip-flop (226) for storing and producing the validation signal (VAL) when an active edge of a clock signal (CLK) is received and a second logic gate (225) for keeping the validation signal (VAL) inactive.

4. Integrated-circuit card according to Claim 2 or 3, **characterised in that** the flip-flop (226) comprises an input terminal D connected to an output terminal of the second logic gate (225), a clock input terminal (CK) onto which the clock signal (CLK) is applied, an initialisation input terminal and an output terminal Q for supplying the validation signal (VAL), and **characterised in that** the second logic gate (225) comprises two input terminals connected respectively to the output terminal of the first logic gate (224) and to the output terminal Q of the flip-flop (226).

5. Integrated-circuit card according to one of Claims 1 to 4, in which the input circuit (200) also receives a second binary signal (SB) and produces a shift and read command signal (RE) and an initialisation command signal (RST) each depending on the first (SA) and second (SB) binary signals.

6. Integrated-circuit card according to Claim 5, in which the monitoring circuit (220) further comprises a third logic gate (228) for making the validation signal (VAL) active when a power-on signal (POR) is received or when the initialisation command signal (RST) is produced by the input circuit (200), the third logic gate (228) comprising two input terminals onto which the power-on signal (POR) and the initialisation command signal are applied respectively, and an output terminal connected to the initialisation input terminal of the flip-flop (226).

7. Integrated-circuit card according to one of Claims 1 to 6, in which the inhibition circuit (240) comprises a fourth logic gate (241) comprising two input terminals onto which the write-command signal (WR) and the validation signal (VAL) are applied respectively, the fourth logic gate (241) also comprising an output terminal for supplying either the write-command signal (WR) if the validation signal (VAL) is active, or a zero control signal if the validation signal (VAL) is inactive.

8. Integrated-circuit card according to one of Claims 5 to 7, in which the inhibition circuit (240) also comprises a fifth logic gate (242) comprising two input terminals onto which the shift and read command signal (RE) and the validation signal (VAL) are applied respectively, the fifth logic gate (242) also comprising an output terminal for supplying either the shift and read command signal (RE) if the validation signal (VAL) is active, or a zero command signal if the validation signal (VAL) is inactive.

9. Integrated-circuit card according to one of Claims 1 to 8, **characterised in that** it further includes an output terminal (209) for supplying the validation signal (VAL) to the reader (150) of the card.

10. Integrated-circuit card according to one of Claims 1 to 9, **characterised in that** it comprises a protection device comprising a first resistor ($r_a$) and a second resistor ($r_b$), the first resistor being connected between the input terminal (201) and earth, the second resistor being connected between the input terminal (201) and the power-supply input terminal (204).

FIG_1 (Art antérieur)

FIG_2

## FIG_3

**FIG_4**